# EUROPEAN PATENT SPECIFICATION

(11) **EP 2 329 608 B1**
(45) Date of publication and mention of the grant of the patent: **14.12.2016**
(21) Application number: 09800121.7
(22) Date of filing: 17.07.2009
(51) Int. Cl.: H04B 10/25, H01Q 3/26, H04J 14/02

(54) **MULTI-FUNCTION ARRAY ANTENNA**
MULTIFUNKTIONS-ARRAYANTENNE
ANTENNE DE RÉSEAU MULTIFONCTIONS

(30) Priority: 25.07.2008 GB 0813684; 25.07.2008 EP 08252539
(43) Date of publication of application: 08.06.2011
(73) Proprietor: BAE Systems PLC, London SW1Y 5AD (GB)
(72) Inventor: NAWAZ, Mohammed, Essex CM2 8HN (GB); JOYCE, Richard,Peter, Essex CM2 8HN (GB); EASTON, Nicholas, John, Essex CM2 8HN (GB)
(74) Representative: BAE SYSTEMS plc Group IP Department
(86) International application number: PCT/GB2009/050877
(87) International publication number: WO 2010/010376

(56) References cited:
- EP-A- 1 250 018
- US-A1- 2006 145 920
- US-B1- 7 084 811

## Description

This invention relates to multi-function array antennas and in particular, but not exclusively, to an optical routing network for selectively routing signals between elements of the array antenna and function-specific equipment.

There is a need for a microwave array antenna able to support multiple functions, sometimes simultaneously, and for means to make an adjustable or scalable selection of antenna elements of the array to operate with particular functions.

From a first aspect, the present invention resides in an optical routing network for a multi-function antenna, comprising:
at least one input for receiving radio frequency (RF) signals;
modulation means comprising at least one opto-electronic modulator linked to the at least one input;
an optical driver linked to the modulation means for generating an optical carrier signal comprising light of one or more of a plurality of different selectable wavelengths; and
optical routing means for receiving modulated optical carrier signals output by the modulation means and for directing modulated light in the modulated signals to one of a plurality of function-specific optical outputs.

In a preferred embodiment, the optical routing means comprise wavelength division demultiplexing means for separately directing modulated light in the modulated optical carrier signals to a different one of the plurality of function-specific optical outputs for each of the one or more selectable wavelengths of light comprised in the optical carrier signal.

In a typical implementation, a number of the inputs to the optical routing network are provided, each linked to a respective opto-electronic modulator for modulating the optical carrier signal using RF signals received at the input. An eight or sixteen input (channel) optical routing network may be a typical implementation of the present invention. In such a multi-input arrangement the wavelength division demultiplexing means comprise a plurality of wavelength division demultiplexers, each linked to a respective one of the opto-electronic modulators and each having a plurality of function-specific optical outputs. Wavelength division multiplexing and demultiplexing enables a multi-frequency optical carrier signal to be generated and, following modulation, separated into its constituent modulated carriers of the selected wavelength(s) and routed according to wavelength using only passive devices.

An advantage in using the preferred passive devices for optical routing is reinforced by the preferred use of an optical driver comprising a plurality of switchable lasers each arranged to output light of a different one of the plurality of selectable wavelengths, each wavelength being associated with a different function of the antenna, and combining means for combining light from two or more of the plurality of lasers to form the optical carrier signal. In this way, function-specific routing of received RF signals may be performed entirely by switching the different lasers on or off or by using optical switches to select light from one or more of the lasers. Multiple functions may be served simultaneously by switching on more than one laser at the same time in the knowledge that each of the different modulated carriers will be routed automatically to the respective functional receivers by the optical routing devices. Laser switching may be performed rapidly, in time periods of the order of 10-100µs, to enable rapid switching or sampling of antenna functions.

A beam-forming network using WDM technology is known from US7084811.

The optical routing network according to this first aspect of the present invention may be applied either to the receiving functions of an array antenna or to the transmitting functions of an antenna. For the receiving functions, a different antenna element or group of antenna elements of the array antenna is linked to each input to the routing network so that signals received by those antenna elements may be routed to different function-specific outputs of the network by selecting different respective optical carrier wavelengths. For the transmitting functions, the inputs to the routing network receive signals from function-specific transmitting equipment and the outputs are linked to specific antenna elements or groups of antenna elements of the array antenna. Signals received at the inputs may be routed to specific outputs and hence to specific elements of the array antenna for transmission by selecting different respective carrier wavelengths in the routing network.

An alternative source of light for generating optical carrier signals is provided by a single tuneable laser operable to output light at one of the plurality of selectable wavelengths to form the optical carrier signal. However, a single tuneable laser is capable of providing light of only one wavelength at a time and hence for use in routing RF signals to receivers in respect of only one function at a time. In such an arrangement, optical routing may be performed by optical routing means comprising a plurality of optical switches, each linked to a respective one of the opto-electronic modulators and each having a plurality of optical outputs, wherein each optical switch is arranged to direct received modulated optical signals to a selectable one of the plurality of optical outputs.

From a second aspect, the present invention resides in a method for routing RF signals between elements of a multi-function array antenna and function-specific equipment in respect of transmitting or receiving functions of the antenna, comprising the steps of:
(i) generating an optical carrier using light of one or more selectable wavelengths;
(ii) modulating the optical carrier with a received RF signal; and
(iii) routing modulated light in the modulated optical carrier to one or more function-specific outputs according to the selected wavelength, wherein each output relates to a different function of the antenna.

In a preferred embodiment according to this second aspect, at step (i), the optical carrier comprises light of a plurality of selected wavelengths combined to form the optical carrier using wavelength division multiplexing and, at step (iii), the modulated optical carrier is separated into modulated carriers at each of the plurality of selected wavelengths for routing to respective function-specific outputs using wavelength division demultiplexing.

In a preferred application of the method, the RF signals comprise signals received by elements of the array antenna and the function-specific outputs are linked to function-specific receiving equipment. Alternatively, the RF signals comprise signals output by function-specific transmitting equipment and the function-specific outputs are linked to elements of the array antenna.

From a third aspect, the present invention resides in a multi-function array antenna having an optical routing network according to the first aspect of the present invention, for directing RF signals received from elements of the antenna to function-specific outputs, wherein, in operation, RF signals are routed to one or more of the function-specific outputs according to which of the of selectable optical carrier signal wavelengths is enabled in the optical routing network.

From a fourth aspect, the present invention resides in a multi-function array antenna having an optical routing network according to the first aspect of the present invention, for directing RF signals received from function-specific transmitting equipment to function-specific outputs linked to elements of the antenna, wherein, in operation, RF signals are routed to one or more of the function-specific outputs according to which of the of selectable optical carrier signal wavelengths is enabled in the optical routing network.

A single multi-function array antenna implemented according to preferred embodiments of the present invention is expected to be less expensive to make than the alternative of providing dedicated antennas for each function. Use of a single antenna also helps to overcome limitations in availability of antenna sites on a given host, e.g. on a ship or an aircraft.

The range of frequencies over which preferred embodiments of the present may be used is generally defined in this patent application by the term "radio frequency". The radio frequency range typically extends from 0.5MHz to 300GHz. However, this frequency range applies in particular to the range of frequencies of operation of the types of array antenna to which the optical routing network of the present invention may typically be applied and is not intended to imply any particular limitations on the range of frequencies of signals that may be routed by means of the optical routing network itself, for example if were to be applied to other applications than array antennas.

Preferred embodiments of the present invention will now be described in more detail, by way of example only, with reference to the accompanying drawings of which:
Figure 1 is a diagram showing an eight channel portion of an optical subsystem and receiver section for a multi-function array antenna according to a preferred embodiment of the present invention; and
Figure 2 is a diagram showing a typical modular implementation of the system shown in Figure 1.

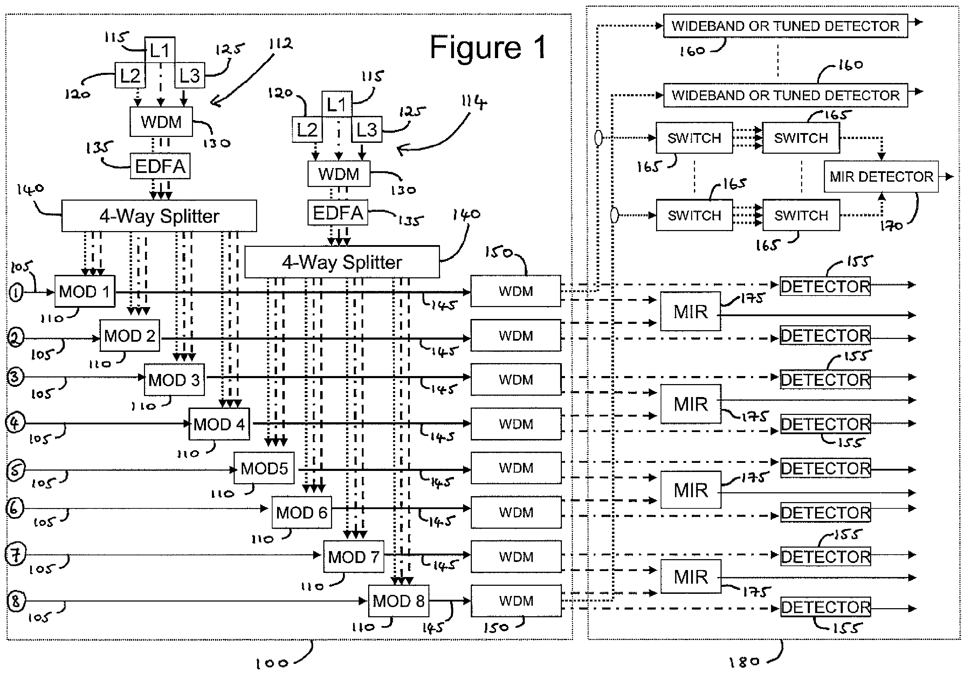

According to a first preferred embodiment of the present invention, an optical routing sub-system for directing signals for the receiving functions of an eight channel multi-function array antenna will now be described with reference to Figure 1. An eight channel sub-system has been chosen for this first preferred embodiment for convenience of illustration and it will be clear that the optical routing sub-system may be scaled to provide 16, 24 or 32 channels, for example, according to the functional requirements of the antenna.

Referring to Figure 1, a diagram is provided to illustrate the key components of an optical routing sub-system 100. The optical routing sub-system 100 is provided with eight inputs, labelled 1 to 8, for receiving radio frequency (RF) signals from elements of an array antenna (not shown in Figure 1) and for carrying the received RF signals over preferably equal lengths of transmission line 105 to the modulating signal inputs of respective opto-electronic modulators 110, labelled "MOD 1" to "MOD 8" in Figure 1. The opto-electronic modulators 110 may be of the Mach-Zehnder interferometer type, for example. The optical sub-system 100 comprises two optical driver units 112, 114, made using polarisation-maintaining optical fibres and devices, each optical driver unit 112, 114 being arranged to generate four optical carrier signals. Each optical driver unit is provided with three polarisation-maintaining lasers 115, 120, 125, labelled "L1" , "L2" and "L3" respectively according to the wavelength of light generated. Any one or more of the lasers 115, 120, 125 may be switched on to output light at any given time. Light output by one or more of the lasers 115, 120, 125 is input to a polarisation-maintaining wavelength division multiplexing (WDM) device 130, if necessary (more than one of the lasers 115, 120, 125 is producing light) to be combined to form a single optical carrier signal. The single optical carrier signal is amplified in a polarisation-maintaining erbium-doped fibre amplifier (EDFA) 135 and input to a polarisation-maintaining 4-way splitter 140 to create the four optical carrier signals. The four optical carrier signals from each splitter 140 are conveyed to the modulators 110 over polarisation-maintaining optical fibres.

A single optical driver unit may alternatively be provided having an 8-way optical splitter to generate eight optical carrier signals. However, the lower optical power levels resulting from use of an 8-way splitter may be not be sufficient in some applications and, furthermore, the flexibility in operating the modulators in separate groups of four would be lost, as will become clear below.

Each of the eight optical carrier signals, four provided by each optical driver unit 112, 114, is carried over a different optical fibre and input to an optical input of a respective one of the eight opto-electronic modulators 110. Each optical carrier signal may then be modulated in one of the opto-electronic modulators 110 by received RF signals.

For the purpose of showing that the optical carrier signals output by the optical driver units 112, 114 may comprise light of up to three different wavelengths, each optical carrier signal output by the 4-way splitters 140 is represented in Figure 1 by a group of three different types of line, each line type designating a different wavelength of light. The path followed by light of each wavelength through the apparatus in Figure 1 is thereby more clearly demonstrated.

The optical carrier signals output by each of the opto-electronic modulators 110, modulated by any received RF signals, are conveyed by different single mode optical fibres 145, preferably all of the same length, for input to respective wavelength division multiplexing (WDM) devices 150. The total length of RF transmission line 105 and optical fibre 145 is chosen so that the total path length between each input and the corresponding WDM device 150 is substantially equal. For beam-forming applications, the required accuracy of path length equalisation may be of the order of ±1mm. The WDM devices 150 are arranged to separate and/or direct the modulated optical carrier signals according to wavelength, in particular according to the three wavelengths of the lasers 115, 120, 125, so separating the modulated optical carrier signal into up to three constituent modulated carrier signals and outputting each constituent modulated carrier from a different output. The different outputs of the WDM devices 150 are connected in a predetermined, function-specific way to detectors (to retrieve the received RF signal from the respective modulated optical carrier) or to optical outputs of a multi-function receiver unit 180, as appropriate for the different functions of the antenna.

It will be clear that, in operation, RF signals received from an antenna over any one of the eight channel inputs (in this preferred embodiment) may be routed to a function-specific group of receivers simply by switching on a laser 115, 120, 125 generating light of the appropriately selected wavelength. The WDM devices 150 will route only the light of the selected wavelength to the intended function-specific group of detectors or outputs in the receiver unit 180. That is, if an optical carrier signal of the appropriate wavelength is input to the modulators 110, then the modulated signals will be directed through the optical routing sub-system 100 to the corresponding functional receivers/outputs.

Conventional laser switching techniques may be used to switch the lasers 115, 120, 125 on and off as required. If solid state lasers are used, for example, they may remain switched on and their output optical power may be controlled by means of an applied bias voltage. Rapid switching of the lasers 115, 120, 125 may be achieved by this technique, or for example by use of separate optical switches in place of the 4-way splitters 140, with switching times of the order of 10-100µs.

In the particular example shown in Figure 1, when the lasers "L1" 115 are switched on and emitting light, the eight received RF signals are routed to separate detectors 155 for a first antenna function, e.g. a surveillance and tracking function. When the lasers "L2" 120 are switched on and emitting light, the eight received RF signals are routed to separate wideband or tuned detectors 160. The signals are also routed to an array of switches 165 in a delay line arrangement, and a MIR Detector 170. When the lasers "L3" 125 are switched on and emitting light, pairs of RF signals are routed to multiple input receivers (MIR) 175, e.g. for a high resolution radar function. Of course, if only one laser 115, 120, 125 in one of the optical driver units 112, 114 is switched on, RF signals from only four of the eight antenna elements will be routed to detectors. Furthermore, if more than one laser 115, 120, 125 of a different wavelength is switched on, RF signals will be routed to detectors in respect of more than one function simultaneously.

Preferably, the lasers 115, 120, 125 are switched according to a time division multiplexing technique designed, for example, to satisfy the beam repointing times or time sharing requirements of each antenna function.

Whereas the system architecture according to this preferred embodiment of the present invention is based upon eight channels, it will be clear that a lesser or greater number of channels may be implemented for a typical multi-function array antenna according to the principles relied upon for this first preferred embodiment.

Preferably, the conversion efficiency of the opto-electronic modulators 110 may be maintained and the noise figures reduced by substantially optimising the linearity of the modulators 110. Linearity may be controlled using a bias controller as described in pending patent applications by the present Applicant, in particular in published international patent application WO 2008/059198 and in international patent application number PCT/GB2008/050453.

Whereas passive WDM devices 130, 150 have been used to combine and then to separate carrier signals of different wavelengths and hence to achieve a desired routing of modulated optical carriers, an optical routing sub-system to achieve similar routing functionality may be implemented using optical switches, for example magneto-optical switches, in place of the WDM devices 130, 150. In such a system, a single optical carrier wavelength may be used and a required routing for the modulated optical signals for each antenna element is achieved by switching the signals between outputs of each switch, so directing the signals to different function-specific detectors and outputs in a receiving unit. However, the insertion loss for multi-way optical switches is typically greater than for WDM devices, increasing with the number of outputs, and the isolation between signal paths provided by WDM devices can be greater than that achievable using switches. However, in some applications, these differences may not be significant and a switch-based architecture may provide an acceptable alternative, within the scope of the present invention.

A further variation on the architecture provided in Figure 1 is to use optical switches in place of the WDM devices 130 to select different wavelength optical carriers being output by the lasers 115, 120, 125, rather than combining optical carrier signals of different wavelengths into a single optical carrier in a WDM device 130. However, if more than one wavelength of optical carrier signal is required, for example to achieve simultaneous routing of RF signals for different functions, then a more complex arrangement of optical switches would be required in order to have the option of selecting more than one carrier signal, with a consequent increase in optical losses.

Further options for switching and supplying optical carriers of different wavelengths in the optical drivers 112, 114 would be apparent to a person of ordinary skill in the relevant art as alternative techniques to switching different wavelength lasers on and off.

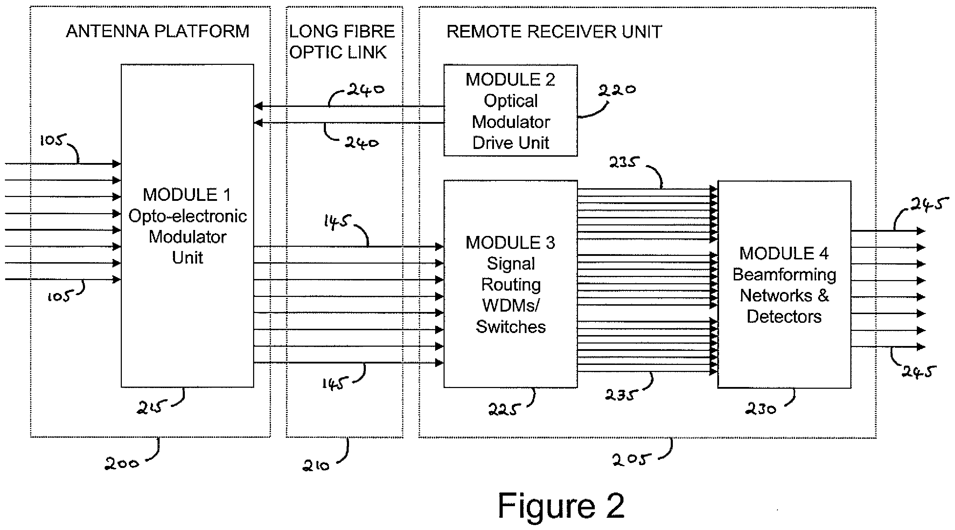

In a practical implementation of the system according to this preferred embodiment of the present invention, the system may be implemented as a number of separate modules which, by virtue of the optical fibre links, may be separated to locate the different modules according to space limitations and performance requirements. A preferred modular implementation of the apparatus illustrated in Figure 1 will now be described with reference to Figure 2 according to a second preferred embodiment of the present invention.

Referring to Figure 2, and additionally to Figure 1, a preferred modular architecture is shown to comprise three groups of equipment: an Antenna Platform 200, which may include the antenna elements themselves, but in general the equipment in this group will be located close to the antenna elements; a Remote Receiver Unit 205 comprising equipment which may be located remotely from the antenna itself, including function-specific detectors and beamforming networks; and a long fibre optic link 210 comprising fibre optic interconnecting cables 145, 240 for linking the remote receiver unit 205 to the antenna platform 200.

The antenna platform 200 comprises a module 215 ("MODULE 1") containing the opto-electronic modulators 110 of the optical routing sub-system 100 in Figure 1, together with the RF transmission line inputs 105 for connection to the antenna and optical output connectors for connection of the single mode optical fibres 145. The remote receiver unit 205 includes: a module 220 ("MODULE 2") containing the optical driver units 112, 114 for generating the optical carrier signals for input to "Module 1" 215 via optical fibres 240 in the fibre optic link 210; a module 225 ("MODULE 3") containing optical signal routing devices, in particular the WDM devices 150 or equivalent switches for performing wavelength-dependent or switched routing of modulated optical signals to function-specific equipment; and a module 230 ("MODULE 4") to which the "Module 3" 225 is linked by optical fibres 235. The "Module 4" 230 contains the function-specific equipment 180 of Figure 1, including the function-specific detectors and switches labelled 155 to 175 in Figure 1, and provides the function-specific outputs 245 from the multi-function antenna system according to this preferred embodiment of the present invention.

Whereas preferred embodiments of the present invention have been described in the context of receiving functions whereby signals are received by elements of an array antenna and routed to function-specific receiving equipment, the optical routing network of the present invention may also be implemented for use in routing signals between inputs connected to function-specific transmitting equipment and outputs linked to selected portions of an array antenna. Selection of those portions of the array antenna that are to receive the function-specific transmissions being input to the optical routing network is achieved in a preferred embodiment of the present invention by selecting the wavelength of an optical carrier signal from a number of selectable wavelengths in a similar manner to that described above in a first preferred embodiment of the present invention.

## Claims

1. An optical routing network for a multi-function antenna, comprising:
at least one input (105) for receiving radio frequency (RF) signals;
modulation means (110) comprising at least one opto-electronic modulator linked to said at least one input;
an optical driver (112) linked to said modulation means (110) for generating an optical carrier signal comprising light of one or more of a plurality of different selectable wavelengths; and
optical wavelength dependent routing means (150) for receiving modulated optical carrier signals output by said modulation means (110) and for directing modulated light in said modulated signals to one of a plurality of function-specific optical outputs, each function-specific optical output corresponding to a predetermined wavelength, and
wherein the plurality of function-specific optical outputs comprise:
a detector (155) for a tracking and surveillance antenna function, and
a Multiple Input Receiver (175) for a high resolution radar system.

2. The optical routing network according to claim 1, wherein said optical routing means comprise wavelength division demultiplexing means for separately directing modulated light in said modulated optical carrier signals to a different one of said plurality of function-specific optical outputs for each of said one or more selectable wavelengths of light comprised in the optical carrier signal.

3. The optical routing network according to claim 1 or claim 2, further comprising a plurality of said inputs each linked to a different respective opto-electronic modulator of said modulation means for modulating said optical carrier signal using RF signals received at the input.

4. The optical routing network according to claim 3, wherein said wavelength division demultiplexing means comprise a plurality of wavelength division demultiplexers, each linked to a respective one of said opto-electronic modulators and each having a plurality of function-specific optical outputs.

5. The optical routing network according to any one of claims 1 to 4, wherein said optical driver comprises a plurality of switchable lasers each arranged to output light of a different one of said plurality of selectable wavelengths, and combining means for combining light from two or more of said plurality of lasers to form said optical carrier signal.

6. The optical routing network according to claim 5, wherein said combining means comprise wavelength division multiplexing means.

7. The optical routing network according to claim 4, wherein said optical driver comprises a plurality of lasers each arranged to output light of a different wavelength, and optical switching means for selecting light from one or more of said plurality of lasers to form said optical carrier signal.

8. The optical routing network according to claim 4, wherein said optical driver comprises a tuneable laser operable to output light at any one of said plurality of selectable wavelengths to form said optical carrier signal.

9. The optical routing network according to claim 1, wherein said optical routing means comprise at least one optical switch, linked to said at least one opto-electronic modulator and having a plurality of optical outputs, operable to direct received modulated optical signals to a selected one of said plurality of optical outputs.

10. A method for routing RF signals between elements of a multi-function array antenna and function-specific equipment in respect of transmitting or receiving functions of the antenna, comprising the steps of:
(i) generating an optical carrier using light of one or more selectable wavelengths;
(ii) modulating the optical carrier with a received RF signal; and
(iii) routing modulated light in the modulated optical carrier to one or more function-specific outputs according to the selected wavelength, wherein each output corresponds to a different predetermined wavelength and relates to a different function of the antenna, and wherein the plurality of function-specific optical outputs comprise: a detector (155) for a tracking and surveillance antenna function, and a Multiple Input Receiver (175) for a high resolution radar system.

11. The method according to claim 10, wherein at step (i) the optical carrier comprises light of a plurality of selected wavelengths combined to form the optical carrier using wavelength division multiplexing and, at step (iii), the modulated optical carrier is separated into modulated carriers at each of the plurality of selected wavelengths for routing to respective function-specific outputs using wavelength division demultiplexing.

12. The method according to claim 10 or claim 11, wherein said RF signals comprise signals received by elements of the array antenna and said function-specific outputs are linked to function-specific receiving equipment.

13. The method according to claim 10 or claim 11, wherein said RF signals comprise signals output by function-specific transmitting equipment and said function-specific outputs are linked to elements of the array antenna.

14. A multi-function array antenna having an optical routing network according to any one of claims 1 to 9 for directing RF signals received from elements of the antenna to function-specific outputs, wherein, in operation, said RF signals are routed to one or more of the function-specific outputs according to which of the of selectable optical carrier signal wavelengths is enabled in the optical routing network.

15. A multi-function array antenna having an optical routing network according to any one of claims 1 to 9 for directing RF signals received from function-specific transmitting equipment to function-specific outputs linked to elements of the antenna, wherein, in operation, said RF signals are routed to one or more of the function-specific outputs according to which of the of selectable optical carrier signal wavelengths is enabled in the optical routing network.

## Patentansprüche

1. Optisches Routingnetz für eine Multifunktions-Antenne, umfassend:
mindestens einen Input (105), um Funkfrequenz (RF)-Signale zu empfangen;
Modulationsmittel (110), umfassend mindestens einen optoelektronischen Modulator, der mit dem mindestens einen Input gekoppelt ist,
einen optischen Treiber (112), der mit den Modulationsmitteln (110) gekoppelt ist, um ein optisches Trägersignal mit Licht mit einem oder mit mehreren einer Vielzahl von verschiedenen wählbaren Wellenlängen zu erzeugen; und
eine optische Wellenlänge, abhängig von
Routingmitteln (150), um modulierte optische Trägersignale, die von den Modulationsmitteln (110) ausgegeben werden, zu empfangen, und um moduliertes Licht in den modulierten Signalen auf einen einer Vielzahl von funktionsspezifischen optischen Outputs zu richten, wobei jeder funtionsspezifische optische Output einer vorbestimmten Wellenlänge entspricht, und
wobei die Vielzahl von funktionsspezifischen optischen Outputs Folgendes umfasst:
einen Detektor (155) für eine Nachverfolgungs- und Überwachungs-Antennenfunktion und einen Mehrfach-Input-Empfägner (175) für ein hochauflösendes Radarsystem.

2. Optisches Routingnetz nach Anspruch 1, wobei die optischen Routingmittel Wellenlängendivisions-Demultiplexingmittel umfassen, um getrennt moduliertes Licht in die modulierten optischen Trägersignale auf einen verschiedenen der Vielzahl von funktionsspezifischen optischen Outputs für jede der einen oder mehreren wählbaren Wellenlängen von Licht, das im optischen Trägersignal enthalten ist, zu richten.

3. Optisches Routingnetz nach Anspruch 1 oder Anspruch 2, weiter umfassend eine Vielzahl der Inputs, die jeweils mit einem verschiedenen entsprechenden optoelektronischen Modulator der Modulationsmittel verbunden sind, um das optische Trägersignal unter Verwendung von RF-Signalen, die am Input empfangen werden, zu modulieren.

4. Optisches Routingnetz nach Anspruch 3, wobei die Wellenlängendivisions-Demultiplexingmittel eine Vielzahl von Wellenlängendivisions-Demultiplexern umfassen, die jeweils mit einem entsprechenden der optoelektronischen Modulatoren gekoppelt sind und jeweils eine Vielzahl von funktionsspezifischen optischen Outputs aufweisen.

5. Optisches Routingnetz nach einem der Ansprüche 1 bis 4, wobei der optische Träger eine Vielzahl von schaltbaren Lasern umfasst, die jeweils angeordnet sind, um Licht einer Verschiedenen der Vielzahl von wählbaren Wellenlängen auszugeben, und Kombinationsmittel, um Licht aus zwei oder mehreren der Vielzahl von Lasern zu kombinieren, um das optische Trägersignal zu bilden.

6. Optisches Routingnetz nach Anspruch 5, wobei die Kombinationsmittel Wellenlängendivisions-Demultiplexingmittel umfassen.

7. Optisches Routingnetz nach Anspruch 4, wobei der optische Träger eine Vielzahl von Lasern umfasst, die jeweils angeordnet sind, um Licht mit einer verschiedenen Wellenlänge auszugeben, und optische Schaltmittel, um Licht aus einer oder mehreren der Vielzahl von Lasern zu wählen, um das optische Trägersignal zu bilden.

8. Optisches Routingnetz nach Anspruch 4, wobei der optische Treiber einen abstimmbaren Laser umfasst, der betriebsbereit ist, um Licht an eine der Vielzahl von wählbaren Wellenlängen auszugeben, um das optische Trägersignal zu bilden.

9. Optisches Routingnetz nach Anspruch 1, wobei die optischen Routingmittel mindestens einen optischen Schalter umfassen, der mit dem mindestens einen optoelektronischen Modulator gekoppelt ist, und eine Vielzahl von optischen Outputs umfasst, die betriebsbereit sind, um empfangene modulierte optische Signale an einen gewählten der Vielzahl von optischen Outputs zu richten.

10. Verfahren zum Routen von RF-Signalen zwischen Elementen einer Multifunktions-Antennenanordnung, und funktionsspezifische Ausrüstung mit Bezug auf die Übertragung oder den Empfang der Antenne, umfassend die folgenden Schritte:
(i) Erzeugen eines optischen Trägers unter Verwendung von einer oder von mehreren Wellenlängen;
(ii) Modulieren des optischen Trägers mit einem empfangenen RF-Signal; und
(iii) Routen des modulierten Lichts im modulierten optischen Träger auf ein oder mehrere funktionsspezifischen Outputs gemäß der gewählten Wellenlänge, wobei jeder Output einer verschiedenen vorbestimmten Wellenlänge entspricht und sich auf eine verschiedene Funktion der Antenne bezieht, und wobei die Vielzahl von funktionsspezifischen optischen Outputs Folgendes umfasst: einen Detektor (155) für eine Nachverfolgungs- und Überwachungs- Antennenfunktion und einen Mehrfach-Input-Empfägner (175) für ein hochauflösendes Radarsystem.

11. Verfahren nach Anspruch 10, wobei bei Schritt (i) der optische Träger Licht einer Vielzahl von gewählten Wellenlängen umfasst, die kombiniert sind, um den optischen Träger unter Verwendung von Wellenlängendivisions-Demultiplexierung zu bilden, und, bei Schritt (iii), der modulierte optische Träger in modulierte Träger an jeder der Vielzahl von gewählten Wellenlängen getrennt ist, um unter Verwendung von Wellenlängendivisions-Demultiplexing an entsprechenden funktionsspezifischen Outputs zu routen.

12. Verfahren nach Anspruch 10 oder Anspruch 11, wobei die RF-Signale Signale umfassen, die von Elementen der Antennenanordnung empfangen werden, und die funktionsspezifischen Outputs mit der funktionsspezifischen Empfangsausrüstung gekoppelt sind.

13. Verfahren nach Anspruch 10 oder Anspruch 11, wobei die RF-Signale Signale umfassen, die von der funktionsspezifischen Übertragungsausrüstung ausgegeben werden, und die funktionsspezifischen Outputs mit Elementen der Antennenanordnung gekoppelt sind.

14. Multifunktions-Antennenanordnung mit einem optischen Routingnetz nach einem der Ansprüche 1 bis 9, um RF-Signale, die von Elementen der Antenne empfangen werden, an funktionsspezifische Outputs zu richten, wobei im Betrieb die RF-Signale an einen oder an mehrere der funktionsspezifischen Outputs geroutet werden, je nachdem, welche der wählbaren Wellenlängen der optischen Trägersignale im optischen Routingnetz freigegeben ist.

15. Multifunktions-Antennenanordnung mit einem optischen Routingnetz nach einem der Ansprüche 1 bis 9, um RF-Signale, die von der funktionsspezifischen Übertragungsausrüstung empfangen werden, an funktionsspezifische Outputs zu richten, die mit Elementen der Antenne gekoppelt sind, wobei im Betrieb die RF-Signale an einen oder an mehrere der funktionsspezifischen Outputs geroutet werden, je nachdem, welche der wählbaren Wellenlängen der optischen Trägersignale im optischen Routingnetz freigegeben ist.

## Revendications

1. Réseau de routage optique pour une antenne multifonctions, comprenant :
au moins une entrée (105) destinée à recevoir des signaux radiofréquence (RF) ;
des moyens de modulation (110) comprenant au moins un modulateur optoélectronique relié à ladite au moins une entrée ;
un excitateur optique (112) relié auxdits moyens de modulation (110) pour générer un signal porteur optique comprenant la lumière d'une ou plusieurs d'une pluralité de longueurs d'onde sélectionnables différentes ; et
des moyens de routage optique dépendants de la longueur d'onde (150) destinés à recevoir des signaux porteurs optiques modulés produits par lesdits moyens de modulation (110) et à diriger la lumière modulée dans lesdits signaux modulés vers l'une d'une pluralité de sorties optiques spécifiques à une fonction, chaque sortie optique spécifique à une fonction correspondant à une longueur d'onde prédéterminée, et
dans lequel la pluralité de sorties optiques spécifiques à une fonction comprennent :
un détecteur (155) destiné à une fonction d'antenne de poursuite et de surveillance, et
un récepteur à entrées multiples (175) destiné à un système de radar haute-résolution.

2. Réseau de routage optique selon la revendication 1, dans lequel lesdits moyens de routage optique comprennent des moyens de démultiplexage en longueur d'onde permettant de diriger séparément la lumière modulée dans lesdits signaux porteurs optiques modulés vers une sortie différente de ladite pluralité de sorties optiques spécifiques à une fonction pour chacune de ladite ou desdites longueurs d'onde sélectionnables de lumière comprises dans le signal porteur optique.

3. Réseau de routage optique selon la revendication 1 ou la revendication 2, comprenant en outre une pluralité desdites entrées reliées chacune à un modulateur optoélectronique respectif différent desdits moyens de modulation permettant de moduler ledit signal porteur optique à l'aide des signaux RF reçus sur l'entrée.

4. Réseau de routage optique selon la revendication 3, dans lequel lesdits moyens de démultiplexage en longueur d'onde comprennent une pluralité de démultiplexeurs en longueur d'onde, chacun relié à un modulateur respectif desdits modulateurs optoélectroniques et ayant chacun une pluralité de sorties optiques spécifiques à une fonction.

5. Réseau de routage optique selon l'une quelconque des revendications 1 à 4, dans lequel ledit excitateur optique comprend une pluralité de lasers commutables chacun agencé pour produire de la lumière d'une longueur d'onde différente de ladite pluralité de longueurs d'onde sélectionnables, et des moyens de combinaison permettant de combiner la lumière de deux de ladite pluralité de lasers ou plus pour former ledit signal porteur optique.

6. Réseau de routage optique selon la revendication 5, dans lequel lesdits moyens de combinaison comprennent des moyens de multiplexage en longueur d'onde.

7. Réseau de routage optique selon la revendication 4, dans lequel ledit excitateur optique comprend une pluralité de lasers, chacun agencé pour produire de la lumière d'une longueur d'onde différente, et des moyens de commutation optique permettant de sélectionner la lumière d'un ou plusieurs de ladite pluralité de lasers pour former ledit signal porteur optique.

8. Réseau de routage optique selon la revendication 4, dans lequel ledit excitateur optique comprend un laser accordable utilisable pour produire de la lumière à l'une quelconque de ladite pluralité de longueurs d'onde sélectionnables pour former ledit signal porteur optique.

9. Réseau de routage optique selon la revendication 1, dans lequel lesdits moyens de routage optique comprennent au moins un commutateur optique, relié audit au moins un modulateur optoélectronique et possédant une pluralité de sorties optiques, utilisable pour diriger les signaux optiques modulés reçus vers une sortie sélectionnée de ladite pluralité de sorties optiques.

10. Procédé de routage de signaux RF entre des éléments d'une antenne réseau multifonctions et des équipements spécifiques à une fonction en ce qui concerne les fonctions de transmission et de réception de l'antenne, comprenant les étapes suivantes :
(i) la génération d'une porteuse optique à l'aide de la lumière d'une ou plusieurs longueurs d'onde sélectionnables ;
(ii) la modulation de la porteuse optique avec un signal RF reçu ; et
(iii) le routage de la lumière modulée dans la porteuse optique modulée vers une ou plusieurs sorties spécifiques à une fonction selon la longueur d'onde sélectionnée, dans lequel chaque sortie correspond à une longueur d'onde prédéterminée différente et concerne une fonction différente de l'antenne, et dans lequel la pluralité de sorties optiques spécifiques à une fonction comprennent : un détecteur (155) destiné à une fonction d'antenne de poursuite et de surveillance, et un récepteur à entrées multiples (175) pour un système de radar haute-résolution.

11. Procédé selon la revendication 10, dans lequel à l'étape (i) la porteuse optique comprend la lumière d'une pluralité de longueurs d'onde sélectionnées combinées pour former la porteuse optique par multiplexage en longueur d'onde et, à l'étape (iii), la porteuse optique modulée est séparée en porteuses modulées à chacune de la pluralité de longueurs d'onde sélectionnées pour le routage vers des sorties spécifiques à une fonction en utilisant le démultiplexage en longueur d'onde.

12. Procédé selon la revendication 10 ou la revendication 11, dans lequel lesdits signaux RF comprennent des signaux reçus par des éléments de l'antenne réseau et lesdites sorties spécifiques sont reliées à des équipements récepteurs spécifiques à une fonction.

13. Procédé selon la revendication 10 ou la revendication 11, dans lequel lesdits signaux RF comprennent des signaux produits par les équipements de transmission spécifiques à une fonction et lesdites sorties spécifiques à une fonction sont reliées à des éléments de l'antenne réseau.

14. Antenne réseau multifonctions comportant un réseau de routage optique selon l'une quelconque des revendications 1 à 9 destinée à diriger des signaux RF reçus des éléments de l'antenne vers des sorties spécifiques à une fonction, dans laquelle, en fonctionnement, lesdits signaux RF sont acheminés vers une ou plusieurs des sorties spécifiques à une fonction en fonction de la longueur d'onde de signal porteur optique sélectionnable activée dans le réseau de routage optique.

15. Antenne réseau multifonctions comportant un réseau de routage optique selon l'une quelconque des revendications 1 à 9 destinée à diriger des signaux RF reçus des équipements de transmission spécifiques à une fonction vers des sorties spécifiques à une fonction reliées à des éléments de l'antenne, dans laquelle, en fonctionnement, lesdits signaux RF sont acheminés vers une ou plusieurs des sorties spécifiques à une fonction en fonction de la longueur d'onde de signal porteur optique sélectionnable activée dans le réseau de routage optique.
